## Europäisches Patentamt

## European Patent Office

## Office européen des brevets

(11) Numéro de publication: **0 164 766**
**B1**

(12) **FASCICULE DE BREVET EUROPÉEN**

(45) Date de publication du fascicule du brevet:
**29.06.88**

(51) Int. Cl.⁴: **B 32 B 27/08**

(21) Numéro de dépôt: **85200555.2**

(22) Date de dépôt: **10.04.85**

(54) **Structures à couches polymériques multiples comprenant une couche en polymère de fluorure de vinyle en de vinilydène liée à une couche en polymère polaire.**

(30) Priorité: **19.04.84 FR 8406372**

(43) Date de publication de la demande:
**18.12.85 Bulletin 85/51**

(45) Mention de la délivrance du brevet:
**29.06.88 Bulletin 88/26**

(84) Etats contractants désignés:
**AT BE CH DE FR GB IT LI NL SE**

(56) Documents cité:
**EP-A-0 060 421**
**EP-A-0 132 583**
**FR-A-2 181 968**
**FR-A-2 545 040**
**US-A-4 416 946**

(73) Titulaire: **SOLVAY & Cie (Société Anonyme), Rue du Prince Albert, 33, B-1050 Bruxelles (BE)**

(72) Inventeur: **Decroly, Pierre, Avenue des Châtaigniers, 17, B-1640 Rhode- Saint- Genese (BE)**
Inventeur: **Dehennau, Claude, Chemin des Postes, 236, B-1410 Waterloo (BE)**

LIBER, STOCKHOLM 1988

**0 164 766**

## Description

La présente invention concerne des structures à couches polymériques multiples comprenant une couche en polymère du fluorure de vinyle ou de vinylidène liée à une couche en polymère polaire et plus particulièrement de telles structures à couches multiples dans lesquelles le polymère du fluorure de vinyle ou de vinylidène est lié au polymère polaire à l'intervention d'un adhésif polymérique.

Les polymères du fluorure de vinyle et les polymères du fluorure de vinylidène sont des polymères thermoplastiques qui présentent un ensemble de propriétés intéressantes et, notamment, une inertie chimique élevée et une excellente résistance aux intempéries et aux rayons ultraviolets. De ce fait, ils trouvent des applications multiples dans des domaines très divers et, notamment, dans la protection contre la corrosion ou les rayons ultraviolets. Néanmoins, ils présentent l'inconvénient d'être relativement coûteux, ce qui risque de limiter leurs débouchés. Un moyen approprié pour réduire le coût des objets façonnés en polymère du fluorure de vinyle ou du fluorure de vinylidène consiste à utiliser ces polymères sous la forme de structures à couches polymériques multiples (films, feuilles, plaques, tubes, corps creux, etc.) dans lesquels ils sont associés à d'autres polymères, lesquels apportent, par ailleurs, leurs propriétés et avantages propres, tels que par exemple la résistance mécanique, l'aptitude au scellage, l'imperméabilité, la résistance à la griffe, etc.. Toutefois, les polymères fluorés précités adhèrent très mal aux autres polymères, de sorte qu'il est généralement nécessaire de recourir à des adhésifs, le plus souvent polymériques, pour assurer un lien adhérent entre ces polymères fluorés et d'autres polymères. Divers adhésifs polymériques ont déjà été proposés pour lier des polymères fluorés à d'autres polymères thermoplastiques.

Dans la demande de brevet européen EP-A-0 60 421 (KUREHA KAGAKU K.K.K.), on décrit des complexes multicouches coextrudés dans lesquels une couche en polyfluorure de vinylidène est associée à une couche en polymère thermoplastique à l'intervention d'une couche adhésive constituée d'un polymère comprenant du méthacrylate de méthyle ou d'éthyle à titre de constituant essentiel.

Dans le brevet US-A-4 416 946 (AMERICAN HOECHST CORP.), on divulgue le collage d'un film en polymère fluoré, de préférence en polychlorotrifluoroéthylène, sur un film en alcool polyvinylique à l'intervention d'un époxyde thermodurcissable.

Dans la demande de brevet français FR-A-2 181 968 (THE DOW CHEMICAL Co.), on décrit des complexes multicouches dans lesquels une couche en résine, par exemple en polyflorure de vinylidène et de préférence en copolymère du chlorure de vinylidène, est liée à une couche en polyamide à l'intervention d'un mélange d'adhésifs constitués de copolymères d'éthylène et d'acétate de vinyle ou d'acrylates d'alkyles et de copolymères d'éthylène et d'acides monocarboxyliques.

Dans la demande de brevet européen intercalaire EP-A-0 132 583 (ALLIED CORP.) = (demande de brevert européen telle que définie à l'article 54 (3) CBE), on divulgue des complexes multicouches coextrudés dans lesquels une couche en polymère fluoré, en particulier en copolymère d'éthylène et de chlorotrifluoroéthylène, est liée à une couche en polymère thermoplastique à l'intervention d'un copolymère modifié de polyoléfine, tel qu'un copolymère modifié d'éthylène et d'acétate de vinyle contenant des groupements carboxyliques.

Enfin, dans le brevet français FR-A-1 484 153 (THE DOW CHEMICAL CO), on préconise de lier une couche en polyoléfine à une couche en polymère d'hydrocarbure fluoré à l'intervention d'un adhésif polymérique constitué, de préférence, d'un copolymère d'éthylène et d'acétate de vinyle contenant d'environ 13 à 35 % en poids d'acétate de vinyle.

On a maintenant constaté que l'utilisation de copolymères d'éthylène et d'acétate de vinyle pour lier un polymère polaire à un polymère d'hydrocarbure fluoré, tel que le fluorure de vinyle ou le fluorure de vinylidène procure des complexes multicouches qui sont sensibles au délaminage au niveau de la couche en polymère fluoré.

La présente invention vise à procurer des structures à couches polymériques multiples comprenant une couche en polymère du fluorure de vinyle ou de vinylidène liée à une couche en polymère polaire qui ne présentent pas l'inconvénient précité.

A cet effet, l'invention procure des structures à couches polymériques multiples comprenant une couche en polymère du fluorure de vinyle ou de vinylidène liée à une couche en polymère polaire à l'intervention d'un polymère d'acétate de vinyle consistant en un copolymère binaire d'acétate de vinyle et d'éthylène contenant de 60 à 90 % en poids d'acétate de vinyle.

Par structures à couches polymériques multiples comprenant une couche en polymère du fluorure de vinyle ou de vinylidène liée à une couche en polymère polaire, on entend désigner les structures multicouches contenant au moins une couche en polymère du fluorure de vinyle ou du fluorure de vinylidène liée à au moins une couche en polymère polaire. Les structures à couches polymériques multiples selon l'invention peuvent donc contenir une ou plusieurs couches en polymère du fluorure de vinyle ou de vinylidène liées à une ou plusieurs couches en polymère polaire, ces couches pouvant elles-mêmes être liées à des couches d'autres polymères.

On a constaté que, contrairement aux copolymères d'éthylène et d'acétate de vinyle préconisés dans l'art antérieur, les polymères d'acétate de vinyle tels que définis ci-dessus adhèrent parfaitement aux polymères du fluorure de vinyle et du fluorure de vinylidène.

En outre, lesdits polymères d'acétate de vinyle adhèrent parfaitement aux polymères polaires.

L'invention réside donc essentiellement dans le recours à un copolymère binaire d'acétate de vinyle et d'éthylène contenant de 60 à 90 % en poids d'acétate de vinyle pour lier et faire adhérer une couche en

2

polymère du fluorure de vinyle ou de vinylidène à une couche en polymère polaire dans la réalisation de structures multicouches.

Les meilleurs résultats sont obtenus avec les copolymères binaires d'acétate de vinyle et d'éthylène contenant de 70 à 85 % en poids d'acétate de vinyle auxquels on donne, par conséquent, la préférence.

Les copolymères binaires d'acétate de vinyle et d'éthylène sont des polymères bien connus en eux-mêmes. Ils peuvent être fabriqués par toutes les techniques usuelles de polymérisation de monomères éthyléniquement insaturés. Habituellement, ils sont fabriqués par polymérisation en émulsion aqueuse.

Les polymères d'acétate de vinyle tels que définis ci-dessus sont des polymères plus ou moins collants et, de ce fait, difficiles à mettre en oeuvre. Afin de pallier cet inconvénient, il est particulièrement avantageux d'utiliser un polymère d'acétate de vinyle enrobé d'un polymère thermoplastique. Suivant un mode de réalisation particulièrement préféré de l'invention, on utilise donc un polymère d'acétate de vinyle enrobé d'un polymère thermoplastique. A titre d'exemples de pareils polymères thermoplastiques, on peut citer les polymères du fluorure de vinyle ou de vinylidène et les polymères du chlorure de vinyle. Un polymère thermoplastique d'enrobage tout particulièrement préféré est le polychlorure de vinyle. Le polymère thermoplastique d'enrobage est généralement présent à raison d'environ 10 % en poids au maximum du polymère d'acétate enrobé.

L'enrobage du polymère d'acétate de vinyle par un polymère thermoplastique peut s'effectuer, par exemple, par addition à un latex de polymère d'acétate de vinyle d'un latex de polymère thermoplastique et coagulation de l'ensemble, par exemple par addition d'un électrolyte.

Par polymère du fluorure de vinyle ou de vinylidène, on entend désigner tous les polymères contenant au moins 85 % molaires, et, de préférence, au moins 90 % molaires d'unités monomériques dérivées respectivement du fluorure de vinyle ou du fluorure de vinylidène. Les polymères du fluorure de vinyle ou de vinylidène qui conviennent à la réalisation des structures multicouches selon l'invention comprennent donc aussi bien les homopolymères du fluorure de vinyle et du fluorure de vinylidène, que les copolymères du fluorure de vinyle ou de vinylidène contenant des unités monomériques dérivées d'un ou de plusieurs comonomères. On donne la préférence aux polymères contenant au moins 90 % molaires d'unités monomériques dérivées respectivement du fluorure de vinyle ou du fluorure de vinylidène, le complément éventuel étant constitué de préférence d'unités monomériques dérivées d'autres oléfines fluorées, tels que le fluorure de vinylidène, le fluorure de vinyle, le trifluoréthylène, le chlorotrifluoréthylène, le tétrafluoréthylène et l'hexafluorpropylène. Des polymères fluorés particulièrement préférés sont l'homopolymère du fluorure de vinyle et l'homopolymère du fluorure de vinylidène et, plus particulièrement encore l'homopolymère du fluorure de vinylidène.

Par polymère polaire, on entend désigner les polymères thermoplastiques, élastomériques et thermodurcissables résultant de la polymérisation par polyaddition ou par polycondensation qui possèdent un moment dipolaire permanent ou autrement dit qui contiennent dans leur molécule des groupements dipolaires. A titre d'exemples de pareils polymères polaires, on peut citer les polymères halogénés tels que les polymères (homo- et copolymères) du chlorure de vinyle, du chlorure de vinylidène et du bromure de vinyle, les polymères contenant des fonctions nitriles tels que le polyacrylonitrile et les copolymères du nitrile acrylique et du styrène, les polymères cellulosiques, les polycétones, les polyesters tant aliphatiques qu'aromatiques, tels que les polyacrylates et polyméthacrylates de méthyle ou d'éthyle et le polyéthylène téréphtalate, les copolymères d'alcool vinylique et d'éthylène (c'est-à-dire les copolymères d'acétate de vinyle et d'éthylène dans lesquels au moins 90 % des groupements acétates ont été transformés par hydrolyse ou alcoolyse en groupements hydroxyles), les polycarbonates aromatiques, les polyamides ou nylons et les polyuréthanes qui constituent, par ailleurs, tous des polymères bien connus.

Des polymères polaires préférés sont le polychlorure de vinyle, les copolymères du chlorure de vinylidène, les copolymères d'alcool vinylique et d'éthylène, le polyéthylène téréphtalate, le polyméthacrylate de méthyle, les polycarbonates aromatiques dérivés du bisphénol A, les nylons 6 et 66 et les polyuréthanes.

Des polymères polaires tout particulièrement préférés sont le polychlorure de vinyle, les copolymères du chlorure de vinylidène et les copolymères d'alcool vinylique et d'éthylène contenant d'environ 15 à 35 % en poids d'éthylène.

Il est entendu que chacun des polymères constitutifs des structures à couches multiples selon l'invention peut comprendre les additifs usuels utilisés à la mise en oeuvre de ce polymère, tels que, par exemple, des lubrifiants, des plastifiants, des stabilisants thermiques, des stabilisants à la lumière, des charges particulaires ou fibreuses, des pigments, etc.. Il est particulièrement avantageux d'incorporer au polymère du fluorure de vinyle ou de vinylidène ou encore au polymère adhésif un agent stabilisant aux rayons ultraviolets en vue de protéger le polymère polaire. De même, il peut être avantageux d'incorporer une faible quantité, par exemple jusqu'à 10 % en poids environ, de polymère adhésif aux polymères constitutifs des structures à couches multiples.

Le mode d'obtention des structures multicouches selon l'invention n'est pas critique. On peut donc faire appel à toutes les techniques usuelles d'assemblage de couches polymériques pour réaliser les structures multicouches selon l'invention. A titre d'exemple de pareille technique, on peut citer le thermocollage à l'intervention d'une solution du polymère d'acétate de vinyle dans un solvant ou un mélange de solvants appropriés. Des solvants convenant pour cette technique d'assemblage sont, par exemple, les hydrocarbures aromatiques, tels que le toluène, les hydrocarbures chlorés, tels que le chlorure de méthylène, les cétones telles que l'acétone et la méthyléthylcétone, les éthers tels que le tétrahydrofuranne et les esters tels que

3

l'acétate d'éthyle et leurs mélanges. On donne néanmoins la préférence à l'acétate d'éthyle. En pratique, le thermocollage à l'intervention d'une solution de polymère d'acétate de vinyle s'effectue par enduction à froid, par exemple à l'aide d'un racle, d'un film, d'une feuille ou d'une plaque en polymère du fluorure de vinyle ou de vinylidène (ou en polymère polaire) au moyen d'une solution de polymère d'acétate de vinyle, séchage de l'enduit et pressage à chaud du film, de la feuille ou de la plaque enduites (préencollées) sur un film, une feuille ou une plaque en polymère polaire (ou en polymère du fluorure de vinyle ou de vinylidène).

La température et la durée de thermocollage optimales seront évaluées par voie expérimentale dans chaque cas particulier. Elles dépendent, notamment, de la nature du polymère polaire, de l'épaisseur des couches polymériques assemblées et des additifs de mise en oeuvre éventuellement incorporés aux différents polymères.

D'autres techniques d'assemblage de couches polymériques usuelles et appropriées pour réaliser les structures multicouches selon l'invention sont celles dans lesquelles les polymères constitutifs sont mis en oeuvre à une température au moins égale à leur température de ramollissement, telles que le thermolaminage (pressage à chaud de couches polymériques préformées, par exemple, par extrusion), la coextrusion et la coextrusion-doublage.

Le choix de l'une ou l'autre de ces techniques d'assemblage se fera en fonction des propriétés, notamment thermiques, du polymère polaire que l'on souhaite lier au polymère du fluorure de vinyle ou de vinylidène.

Des structures à couches polymériques multiples auxquelles on donne la préférence sont celles résultant d'un assemblage par thermocollage ou encore par thermolaminage, par coextrusion ou par coextrusion-doublage et qui comprennent trois couches, en l'occurence et dans l'ordre une couche en polymère du fluorure de vinyle ou de vinylidène, une couche en polymère d'acétate de vinyle et une couche en polymère polaire, ce dernier étant, de préférence, choisi parmi le polychlorure de vinyle, les copolymères du chlorure de vinylidène et les copolymères d'alcool vinylique et d'éthylène contenant environ 15 à 35 % en poids d'éthylène.

L'épaisseur des couches polymériques constitutives des structures à couches multiples selon l'invention et l'épaisseur totale desdites structures ne sont pas critiques et dépendent bien entendu de l'usage auquel on les destine. Les structures à couches polymériques multiples selon l'invention peuvent donc se présenter sous la forme de films, de feuilles, de plaques, de tubes, de corps creux, etc.

Les structures à couches polymériques multiples selon l'invention peuvent être utilisées avantageusement, sous la forme de films, de feuilles, de plaques, de tubes ou de corps creux, dans des domaines d'application exigeant une inertie chimique élevée, tels que dans les industries chimiques, pharmaceutiques et alimentaires ou encore une résistance élevée aux rayons ultraviolets, tels que par exemple dans la fabrication de films agricoles ou de serres. A titre d'exemples pratiques non limitatifs d'utilisations de complexes multicouches selon l'invention, on peut signaler des tubes multicouches résistant à la corrosion comprenant une couche en polychlorure de vinyle rigide, des films et des feuilles multicouches pour l'agriculture comprenant une couche en polychlorure de vinyle ou en polyméthacrylate de méthyle, des bâches et des voiles multicouches comprenant une couche en polyuréthane ou en polyéthylène téréphtalate, dans lesquels les couches constituées par les polymères polaires précités sont liées à une couche en polymère du fluorure de vinyle ou de vinylidène, et de préférence en polyfluorure de vinylidène, à l'intervention d'un polymère d'acétate de vinyle.

Les exemples qui suivent illustrent l'invention sans toutefois la limiter.

L'exemple 1, selon l'invention, concerne une structure tubulaire coextrudée à trois couches comprenant, dans l'ordre, une couche (A) en homopolymère du fluorure de vinylidène (épaisseur 200 μm), une couche (B) en copolymère d'acétate de vinyle et d'éthylène contenant 88 % en poids d'acétate de vinyle (épaisseur : 200 μm) et une couche (C) en polychlorure de vinyle souple (épaisseur : 540 μm).

L'exemple 2, de référence, concerne une structure coextrudée à trois couches similaire à celle de l'exemple 1, si ce n'est que le polymère adhésif (couche B) est un copolymère d'éthylène et d'acétate de vinyle contenant 61% en poids d'éthylène.

Pour fabriquer les structures coextrudées à trois couches des exemples 1 et 2, on dispose de trois extrudeuses (A) (B) (C) alimentant une tête de coextrusion particulière. Les températures de chauffe affichées sont depuis la zone d'alimentation à la zone de pompage respectivement de :

| | |
|---|---|
| 200°C - 210°C | sur l'extrudeuse A |
| 90°C - 140°C | sur l'extrudeuse B |
| 155°C - 165°C - 180°C - 180°C | sur l'extrudeuse C |

Les extrudeuses A, B et C alimentent respectivement les couches A, B et C de la structure coextrudée.

Les exemples 3 et 4, selon l'invention, concernent des structures à cinq couches obtenues par coextrusion-doublage.

Dans l'exemple 3, on double en continu dès la sortie de la filière plate et sous une pression faible une structure coextrudée à deux couches fabriquée avec la filière plate précitée et constituée d'une couche en un copolymère du fluorure de vinylidène contenant 5 % en poids d'unités monomériques dérivées d'une oléfine fluorée (épaisseur moyenne : 800 μm) et d'une couche en copolymère d'acétate de vinyle et d'éthylène contenant 60 % en poids d'acétate de vinyle (épaisseur moyenne 170 μm) d'une structure à trois couches non préchauffée constituée d'un textile enduit sur les deux faces de polychlorure de vinyle souple (épaisseur totale: 800 μm).

4

Dans l'exemple 4 et selon le mode opératoire décrit à l'exemple 3, on double en continu la structure coextrudée à deux couches de l'exemple 3 d'une structure à trois couches non préchauffée constituée d'un textile enduit sur les deux faces de polyuréthane élastomérique (épaisseur totale : 200 µm).

Dans le Tableau I sont repris les résultats de l'évaluation de l'adhérence mesurée par le biais de la résistance au pelage des structures multicouches selon les exemples 1 à 4. La résistance au pelage est mesurée sur un dynamomètre FRANK type 650 suivant une méthode inspirée de la norme ASTM D 1876-72.

Les exemples 5 à 12, selon l'invention, concernent le thermocollage d'une couche en homopolymère du fluorure de vinylidène (film d'une épaisseur de 100 µm) sur une couche en polymère polaire à l'intervention d'un copolymère d'acétate de vinyle et d'éthylène contenant 75 % en poids d'acétate de vinyle, enrobé de polychlorure de vinyle représentant 7,5 % en poids du copolymère d'acétate de vinyle enrobé.

Avec une racle à fil de 150 µm, on enduit le film en polyfluorure de vinylidène d'une solution de copolymère d'acétate de vinyle à 30 % en poids dans l'acétate d'éthyle, on sèche l'enduit pendant 6 heures à température ambiante, après quoi on applique dans les mêmes conditions une seconde couche de copolymère d'acétate de vinyle (en solution à 30 % en poids dans l'acétate d'éthyle) et on sèche l'enduit pendant 24 heures à température ambiante. L'épaisseur totale de l'enduit sec s'élève à 90 µm. Le film préencollé en polyfluorure de vinylidène est pressé à chaud sur une couche en polymère polaire pendant 20 minutes et sous une pression de 46 Kg/cm$^2$ dans une presse LAFARGE maintenue à 120°C, puis le complexe est transféré dans une presse froide et y est maintenu à température ambiante pendant 10 minutes sous la même pression.

L'exemple 13, de référence, concerne le thermocollage d'une couche en homopolymère du fluorure de vinylidène (film d'une épaisseur de 100 µm) sur une couche en polychlorure de vinyle rigide (film d'une épaisseur de 200 µm) à l'intervention d'un copolymère d'éthylène et d'acétate de vinyle contenant 61 % en poids d'éthylène.

Avec une racle à fil de 150 µm, on enduit le film en polyfluorure de vinylidène d'une solution du copolymère d'éthylène à 40 % en poids dans le tétrahydrofuranne appliquée en deux couches suivant le mode opératoire des exemples 5 à 12. L'épaisseur totale de l'enduit sec s'élève à 120 µm. Le film préencollé en polyfluorure de vinylidène est pressé suivant le mode opératoire des exemples 5 à 12 sur le film en polychlorure de vinyle rigide.

La nature du polymère polaire et l'épaisseur de la couche en polymère polaire utilisé dans les exemples 5 à 13, ainsi que les résultats de l'évaluation de la résistance au pelage des structures multicouches obtenues par thermocollage dans les exemples 5 à 13 sont repris au Tableau II.

## TABLEAU I

| N° de l'exemple | Mode d'obtention de la structure multicouche | Polymère polaire | Résistance au pelage Newton/cm |
|---|---|---|---|
| 1 | coextrusion | Polychlorure de vinyle souple | > 10 |
| 2 | coextrusion | Polychlorure de vinyle souple | 3,77 |
| 3 | coextrusion-doublage | Polychlorure de vinyle souple | > 10 |
| 4 | coextrusion-doublage | Polyuréthane élastomérique | 7,55 |

**TABLEAU II**

| N° de l'éxemple | Polymère polaire | | Résistance au pelage |
| --- | --- | --- | --- |
| | Nature | Epaisseur de la couche | Newton/cm |
| 5 | Copolymère d'alcool vinylique et d'éthylène à 20 % en poids d'éthylène | 50 μm | 12,50 |
| 6 | Polyéthylène téréphtalate | 50 μm | 15 |
| 7 | Nylon 6 | 30 μm | 8,93 |
| 8 | Copolymère du chlorure de vinylidène et du chlorure de vinyle | 20 μm | 12,40 |
| 9 | Polychlorure de vinyle rigide | 200 μm | 21,90 |
| 10 | Polyméthacrylate de méthyle | 4 mm | 19,45 |
| 11 | Polyuréthane élastomérique | 0,8 mm | 14,62 |
| 12 | Polycarbonate aromatique dérivé de bisphénol A | 4 mm | 15,00 |
| 13 | Polychlorure de vinyle rigide | 200 μm | 4,74 |

**Revendications**

1. Structures à couches polymériques multiples comprenant une couche en polymère du fluorure de vinyle ou de vinylidène liée à une couche en polymère polaire, caractérisées en ce que la couche en polymère du fluorure de vinyle ou de vinylidène est liée à la couche en polymère polaire à l'intervention d'un polymère d'acétate de vinyle consistant en un copolymère binaire d'acétate de vinyle et d'éthylène contenant de 60 à 90 % en poids d'acétate de vinyle.

2. Structures à couches polymériques multiples suivant la revendication 1, caractérisées en ce que le polymère d'acétate de vinyle est un copolymère binaire d'acétate de vinyle et d'éthylène contenant de 70 à 85 % en poids d'acétate de vinyle.

3. Structures à couches polymériques multiples suivant l'une quelconque des revendications 1 et 2, caractérisées en ce que le polymère d'acétate de vinyle est enrobé d'un polymère thermoplastique.

4. Structures à couches polymériques multiples suivant la revendication 3, caractérisées en ce que le polymère thermoplastique d'enrobage est choisi parmi les polymères du fluorure de vinyle et de vinylidène et les polymères du chlorure de vinyle et en ce qu'il est présent à raison d'environ 10 % en poids au maximum du polymère d'acétate enrobé.

5. Structures à couches polymériques multiples suivant l'une quelconque des revendications 1 à 4, caractérisées en ce que le polymère du fluorure de vinyle ou de vinylidène est un homopolymère du fluorure de vinylidène.

6. Structures à couches polymériques multiples suivant l'une quelconque des revendications 1 à 4, caractérisées en ce que le polymère du fluorure de vinyle ou de vinylidène est un homopolymère du fluorure de vinyle.

7. Structures à couches polymériques multiples suivant l'une quelconque des revendications 1 à 6, caractérisées en ce que le polymère polaire est choisi parmi le polychlorure de vinyle, les copolymères du chlorure de vinylidène, les copolymères d'alcool vinylique et d'éthylène, le polyéthylène téréphtalate, le polyméthacrylate de méthyle, les polycarbonates aromatiques dérivés du bisphénol A, les nylons 6 et 66 et les polyuréthanes.

8. Structures à couches polymériques multiples suivant la revendication 7, caractérisées en ce que le polymère polaire est choisi parmi le polychlorure de vinyle, les copolymères du chlorure de vinylidène et les copolymères d'alcool vinylique et d'éthylène contenant d'environ 15 à 35 % en poids d'éthylène.

9. Structures à couches polymériques multiples suivant l'une quelconque des revendications 1 à 8, caractérisées en ce qu'elles résultent d'un assemblage par thermocollage à l'intervention d'une solution de polymère d'acétate de vinyle.

10. Structures à couches polymériques multiples suivant l'une quelconque des revendications 1 à 8, caractérisées en ce qu'elles résultent d'un assemblage par thermolaminage, par coextrusion ou par coextrusion-doublage.

## Patentansprüche

1. Mehrere Polymerschichten enthaltende Strukturen aus einer Vinyl- oder Vinylidenfluoridpolymerschicht verbunden mit einer Polarpolymerschicht, dadurch gekennzeichnet, daß die Vinyl- oder Vinylidenfluoridpolymerschicht mit der Polarpolymerschicht verbunden ist mittels eines Vinylacetatpolymers bestehend aus einem binären Copolymeren von Vinylacetat und Ethylen enthaltend 60 bis 90 Gew.-% Vinylacetat.

2. Mehrere Polymerschichten enthaltende Strukturen gemäß Anspruch 1, dadurch gekennzeichnet, daß das Vinylacetatpolymer ein binäres Copolymer aus Vinylacetat und Ethylen enthaltend 70 bis 85 Gew.-% Vinylacetat ist.

3. Mehrere Polymerschichten enthaltende Strukturen nach einem der Ansprüche 1 bis 2, dadurch gekennzeichnet, daß das Vinylacetatpolymer mit einem thermoplastischem Polymer umhüllt ist.

4. Mehrere Polymerschichten enthaltende Strukturen nach Anspruch 3, dadurch gekennzeichnet, daß das thermoplastische Umhüllungspolymer ausgewählt ist unter den Polymeren von Vinylfluorid und Vinylidenfluorid und den Vinylchloridpolymeren und daß es anwesend ist in einer Menge von ungefähr 10 Gew.-% höchstens bezogen auf das umhüllte Acetatpolymere.

5. Mehrere Polymerschichten enthaltende Strukturen nach einem der Ansprüche 1 bis 4, dadurch gekennzeichnet, daß das Vinyl- oder Vinylidenfluoridpolymer ein Homopolymer von Vinylidenfluorid ist.

6. Mehrere Polymerschichten enthaltende Strukturen nach einem der Ansprüche 1 bis 4, dadurch gekennzeichnet, daß das Vinyliden- oder Vinylfluoridpolymer ein Homopolymer von Vinylfluorid ist.

7. Mehrere Polymerschichten enthaltende Strukturen nach einem der Ansprüche 1 bis 6, dadurch gekennzeichneet, daß das Polarpolymer ausgewählt ist unter Polyvinylchlorid, den Copolymeren von Vinylidenchlorid, den Copolymeren von Vinylalkohol und Ethylen, Polyethylenterephthalat, Polymethylmethacrylat, den aromatischen Polycarbonatderivaten von Bisphenol A, den Nylons 6 und 66 und den Polyurethanen.

8. Mehrere Polymerschichten enthaltende Strukturen nach Anspruch 7, dadurch gekennzeichnet, daß das Polarpolymer ausgewählt ist unter Polyvinylchlorid, den Copolymeren von Vinylidenchlorid und den Copolymeren von Vinylalkohol und Ethylen enthaltend ungefähr 15 bis 35 Gew.-% Ethylen.

9. Mehrere Polymerschichten enthaltende Strukturen nach einem der Ansprüche 1 bis 8, dadurch gekennzeichnet, daß sie gebildet sind durch Zusammenfügen mittels Heißverklebung mittels einer Lösung von einem Vinylacetatpolymer.

10. Mehrere Polymerschichten enthaltende Strukturen nach einem der Ansprüche 1 bis 8, dadurch gekennzeichnet, daß sie gebildet sind durch eine Vereinigung durch Heißlaminierung, durch Coextrusion oder durch Coextrusion-Doublierung.

## Claims

1. Polymeric multilayer structures comprising a layer made of vinyl fluoride or vinylidene fluoride polymer which is bonded to a polar polymer layer, which are characterized in that the layer made of vinyl fluoride or vinylidene fluoride polymer is bonded to the polar polymer layer by means of a vinyl acetate polymer consisting of a binary copolymer of vinyl acetate and ethylene, containing from 60 to 90 % by weight of vinyl acetate.

2. Polymeric multilayer structures according to Claim 1, characterized in that the vinyl acetate polymer is a binary copolymer of vinyl acetate and ethylene containing from 70 to 85 % by weight of vinyl acetate.

3. Polymeric multilayer structures according to either of Claims 1 and 2, characterized in that the vinyl acetate polymer is coated with a thermoplastic polymer.

4. Polymeric multilayer structures according to Claim 3, characterized in that the thermoplastic coating polymer is chosen from vinyl fluoride and vinylidene fluoride polymers and vinyl chloride polymers and and in that it is present in a proportion of at most approximately 10 % by weight of the coated acetate polymer.

5. Polymeric multilayer structures according to any one of Claims 1 to 4, characterized in that the vinyl fluoride or vinylidene fluoride polymer is a vinylidene fluoride homopolymer.

6. Polymeric multilayer structures according to any one of Claims 1 to 4, characterized in that the vinyl fluoride or vinylidene fluoride polymer is a vinyl fluoride homopolymer.

7. Polymeric multilayer structures according to any one of Claims 1 to 6, characterized in that the polar polymer is chosen from polyvinyl chloride, vinylidene chloride copolymers, vinyl alcohol/ethylene copolymers, polyethylene terephthalate, polymethyl methacrylate, aromatic polycarbonates derived from bisphenol A, nylons 6 and 66 and polyurethanes.

8. Polymeric multilayer structures according to Claim 7, characterized in that the polar polymer is chosen from polyvinyl chloride, vinylidene chloride copolymers and vinyl alcohol/ethylene copolymers containing from approximately 15 to 35 % by weight of ethylene.

9. Polymeric multilayer structures according to any one of Claims 1 to 8, characterized in that they are produced by assembling by heat reactivation with the use of a solution of vinyl acetate polymer.

10. Polymeric multilayer structures according to any one of Claims 1 to 8, characterized in that they are produced by assembling using heat lamination, coextrusion or coextrusion-lining.